# EUROPÄISCHE PATENTSCHRIFT

(11) **EP 1 252 846 B1**
(45) Veröffentlichungstag und Bekanntmachung des Hinweises auf die Patenterteilung: **29.09.2004**
(21) Anmeldenummer: 02009444.7
(22) Anmeldetag: 25.04.2002
(51) Int. Cl.: A47J 27/00

(54) **Eigenbeheizbares Garmodul mit spielend gelagertem Heizglied**
Self heating cooking appliace with movably supported heating modul
Appareil de cuisson avec elément chauffant en position libre

(30) Priorität: 25.04.2001 DE 10120135
(43) Veröffentlichungstag der Anmeldung: 30.10.2002
(73) Patentinhaber: Rational AG, 86899 Landsberg/Lech (DE); FRIMA S.A., 68271 Wittenheim Cedex (FR)
(72) Erfinder: Wiedemann, Peter, 86836 Klsoterlechfeld (DE); Kohlstrung, Peter, 86916 Kaufering (DE); Gluck, Pascal, 68100 Mulhouse (FR)
(74) Vertreter: Weber-Bruls, Dorothée, Dr.

(56) Entgegenhaltungen:
- EP-A- 0 919 169
- DE-C- 689 533
- US-A- 5 092 229
- US-A- 5 794 522
- US-B1- 6 173 643

## Beschreibung

Die Erfindung betrifft ein eigenbeheizbares Garmodul nach dem Oberbegriff des Anspruchs 1.

Ein eigenbeheiztes Garmodul ist bspw. aus der DE-PS 866 220 oder DE 299 03 775 U1 bekannt, bei dem ein Heizelement direkt an einen Innenbehälter angepreßt wird, um einen möglichst großen Wärmeübertrag zwischen dem Heizelement und dem Innenbehälter zu erzielen. Dieses bekannte Garmodul besitzt aber den Nachteil, daß thermische Verspannungen unter anderem in dem Innenbehälter insbesondere durch ungleichmäßiges Aufwärmen des Innenbehälters auftreten können, die unter Umständen zu örtlichen Verformungen des Innenbehälters und somit zu einer ungleichmäßigen Erwärmung oder gar zu einem teilweisen Anbrennen von Gargut führen können. Ferner besitzt dieses bekannte Garmodul den Nachteil der thermischen Trägheit, d.h., bei einer Reduzierung oder Wegnahme der Heizleistung sorgt die im Heizelement gespeicherte Wärme für eine weitere unerwünschte Wärmeeinspeisung in das Gargut.

Aus der EP 0 919 169 A1 ist ein Druckkochtopf bekannt, der ein gattungsgemäßes Garmodul darstellt und bei dem ein Heizelement direkt an einen Innenbehälter angepreßt wird. Hierbei soll das auf Federn gelagerte Heizelement bei erhöhtem Druck im Innenbehälter nach unten gedrückt werden und so ein Ausschalten des Heizelements bei zu hohem Druck sicherstellen.

Dies wird durch eine mechanische Übertragung des Druckes zwecks Verschiebung eines Stiftes bewerkstelligt, der einen Schalter betätigt. Allerdings weist dieses Garmodul den Nachteil auf, daß bei spontanem Abschalten desselben noch Restwärme vom Heizmodul in den Behälter eingetragen wird, was zu einem Anbrennen von Gargut bzw. zu einem weiteren unerwünschten Wärmeeintrag führen kann.

In der US 5,092,229 wird ein Garmodul offenbart, das einen Innen- und einen Außenbehälter aufweist, wobei der Außenbehälter an seinem unteren Ende in einer Vertiefung Wasser aufweist, und auf der dem Wasser gegenüberliegenden Seite der Behälterwand sich ein Heizelement befindet. Dieses Garmodul soll den Vorteil haben, daß Speisen in dem Innenbehälter aufgrund der Dampfatmosphäre zwischen dem Innen- und dem Außenbehälter gleichmäßig gegart werden. Das Heizelement steht nicht im direkten Kontakt mit dem Innenbehälter.

In der DE-PS 689 533 wird eine Einrichtung offenbart, die ein Kochgefäß magnetisch festhalten kann. Dies wird mit Hilfe eines magnetisierbaren Glieds erreicht. Das Festhalten des Kochgefäßes soll auch unabhängig von einem eingeschalteten Heizstrom funktionieren.

Der Erfindung liegt somit die Aufgabe zugrunde, das gattungsgemäße Garmodul derart weiterzuentwickeln, daß die Nachteile des Stands der Technik überwunden werden, insbesondere ein gleichmäßiges, reproduzierbares Garen sichergestellt wird.

Diese Aufgabe wird erfindungsgemäß durch die Merkmale des Kennzeichens von Anspruch 1 gelöst.

Vorteilhafte Ausführungsformen der Erfindung sind in den Ansprüchen 2 bis 8 dargestellt.

Der Erfindung liegt somit die Erkenntnis zugrunde, daß gleichmäßige und reproduzierbare Garergebnisse durch eine thermische Ankopplung in einem Garmodul, die selbstregelnd und/oder einstellbar ist, über eine spielende Lagerung eines Glieds zwischen einem Heizelement bzw. einem Außenbehälter und einem Innenbehälter zur Aufnahme von Gargut, erzielbar sind, wobei gleichzeitig ein Garen von Gargut durch das während des Garens an den Innenbehälter anpreßbare und lösbare Glied individuell auf einen Garprozeß abgestimmt werden.

Der Vorzug, die Wärmeankopplung durch ein selbstregelndes und/oder einstellbares Anpressen des Glieds, wie in Form einer Bodenplatte zwischen dem Innenbehälter und dem Außenbehälter, zu maximieren und gleichzeitig eine thermische Verspannung des Innenbehälters zu verhindern, sowie ein effizientes Unterbinden weiteren Wärmeeintrages in das Gargut über das Glied bei ausgeschaltetem Heizelement durch eine gezielte Abkopplung des Glieds von dem Innenbehälter, zeigt sich bei einem erfindungsgemäßen Garmodul unter anderem in Kombination mit einem Sensor für die Temperatur im Innenbehälter oder im Gargut, die Feuchte im Innenbehälter oder im Gargut, die Last auf dem Innenbehälter oder dergleichen, wie in Form eines aus der DE 299 23 215 bekannten Garprozeßfühlers. Solch ein, in ein Gargut bereichsweise einsteckbarer Garprozeßfühler erfaßt eine bestimmte Gargutgröße und liefert sie an eine Steuer- und/oder Regeleinheit, die wiederum das Heizelement und eine Stelleinheit für das Glied ansprechen kann. Der Garprozeß erfährt hierdurch eine Automatisierung, die ein Verkochen oder Anbrennen des Garguts ausschließt.

Zudem lassen sich, aufgrund des spielend gelagerten Glieds, beliebige Materialien für die Ausgestaltung des Innenbehälters sowie des Glieds miteinander kombinieren, da ein thermischer Verzug, bedingt durch unterschiedliche thermische Ausdehnungskoeffizienten, keine negativen Einflüsse mit sich bringt. Insbesondere lassen sich keramische und metallische Materialien miteinander kombinieren.

Da nach einer zweckmäßigen Ausgestaltung der Erfindung das Heizelement identisch mit dem wärmeleitenden Glied sein kann, zumindest über dieses Glied den Innenbehälter beheizt, werden thermische Spannungen im Vergleich zum Stand der Technik weiter minimiert.

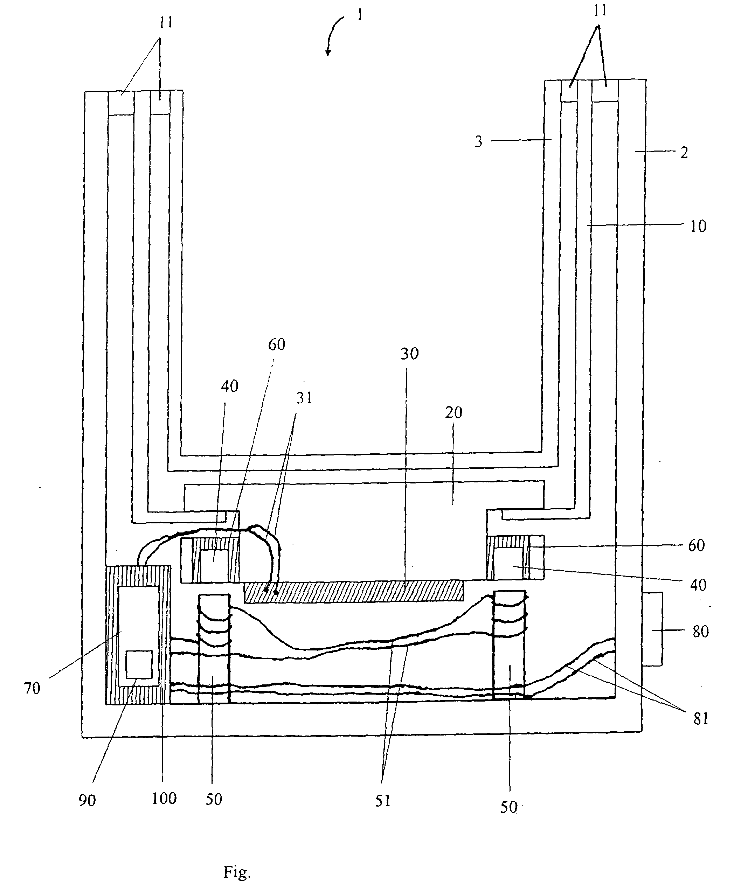

In der nachfolgenden Beschreibung wird ein Ausführungsbeispiel der Erfindung anhand einer schematischen Zeichnung im Einzelnen erläutert. Die aus einer einzigen Figur bestehende Zeichnung zeigt ein erfindungsgemäßes Garmodul im Vertikalschnitt.

Wie der Figur zu entnehmen ist, umfaßt ein erfindungsgemäßes Garmodul 1 einen Außenbehälter 2, einen Innenbehälter 3 und ein Zwischenglied 10, wobei der Außenbehälter 2 und der Innenbehälter 3 über Schweißverbindungen 11 das Zwischenglied 10 tragen, auf dem wiederum eine Bodenplatte 20 spielend gelagert ist. An der dem Innenbehälter 3 abgewandten Seite der Bodenplatte 20, also der Unterseite der Bodenplatte 20, ist ein Heizelement 30 angebracht, das über Heizleitungen 31 mit Strom gespeist wird. In die Unterseite der Bodenplatte 20 sind zwei Permanentmagnete 40 angebracht, die thermisch von der Bodenplatte 20 durch eine Isolierung 60 entkoppelt sind. Unterhalb der Permanentmagnete 40 sitzen in definiertem Abstand Elektromagnete 50 auf dem Außenbehälter 2, die wiederum über Elektromagnetleitung 51 aktivierbar sind. Die Heizleitungen 31 sowie Elektromagnetleitungen 51 führen zu einer Regeleinheit 100. Die Regeleinheit 100 ist über Versorgungsleitungen 81 mit einem Netzanschluß 80 verbunden. In der Wand des Außenbehälters 2 ist ein für elektromagnetische Strahlung transparentes Fenster 70 angebracht und ein manueller EIN/AUS-Schalter 90 eingefaßt.

Der Wärmeübertrag zwischen der Bodenplatte 20 und dem Innenbehälter 3 kann durch die Verwendung von nicht gezeigter Wärmeleitpaste gesteigert werden.

Werden an den Netzanschluß 80 des Garmoduls 1 220 Volt angelegt, so beginnt die Regeleinheit 100 das Heizelement 30 über die Heizleitungen 31 mit Strom zu versorgen, wodurch das Heizelement 30 und durch Wärmeleitung auch die Bodenplatte 20 sowie der Innenbehälter 3 regelbar erwärmt werden. Gleichzeitig werden über die Elektromagnetleitungen 51 die Elektromagneten 50 von der Regeleinheit 100 aktiviert, wodurch bei entsprechender Polung der Permanentmagnete 40, diese von den Elektromagneten 50 abgestoßen und somit mit samt der Bodenplatte 20 an den Innenbehälter 3 gepreßt werden. Die Regeleinheit 100 ist mit einer Antenne (nicht dargestellt) ausgestattet, die durch das Fenster 70 elektromagnetische Strahlung von einer externen Regelungseinheit (nicht dargestellt) empfangen kann. Soll der Wärmeeintrag über die Bodenplatte 20 verhindert werden, z. B. aufgrund einer über einen Sensor (nicht dargestellt) erfaßten Gargutgröße, so können die Elektromagneten 50 gezielt deaktiviert werden. Hierbei muß nicht zwingend die Heizleistung unterbrochen werden. Der EIN/AUS-Schalter 90 ermöglicht zusätzlich ein manuelles Aktivieren und Deaktivieren des Heizelements 30 sowie der Elektromagneten 50.

Durch das erfindungsgemäße Garmodul 1 wird es somit erstmals ermöglicht, ein Heizelement selbstregelnd und/oder einstellbar gegen einen ein Gargut aufnehmenden Innenbehälter anzudrücken, wobei nicht nur thermische Verspannungen und somit Verformungen des Innenbehälters vermieden werden, sondern auch der Wärmeeintrag in das Gargut variierbar ist, wodurch gezielt gleichmäßige Garergebnisse erreichbar sind.

Die in der vorstehenden Beschreibung, den Ansprüchen sowie der Zeichnung offenbarten Merkmale der Erfindung können sowohl einzeln als auch in jeder beliebigen Kombination für die Verwirklichung der Erfindung in ihren verschiedenen Ausführungsformen wesentlich sein.

### Bezugszeichenliste

- 1: Garmodul
- 2: Außenbehälter
- 3: Innenbehälter
- 10: Zwischenglied
- 11: Schweißverbindung
- 20: Bodenplatte
- 30: Heizelement
- 31: Heizleitung
- 40: Permanentmagnet
- 50: Elektromagnet
- 51: Elektromagnetleitung
- 60: Isolierung
- 70: Fenster
- 80: Netzanschluß
- 81: Versorgungsleitung
- 90: EIN/AUS-Schalter
- 100: Regeleinheit

## Patentansprüche

1. Eigenbeheizbares Garmodul (1) mit einem Behältnis (2, 3, 10, 20) zur Aufnahme von Gargut und zumindest einem Heizelement (30) in Wärmeleitkontakt mit zumindest einem Teil (20) des Behältnisses (2, 3, 10, 20), wobei das Behältnis einen Innenbehälter (3) und einen den Innenbehälter (3) zumindest bereichsweise umgebenden Außenbehälter (2) umfaßt, wobei
zwischen dem Innenbehälter (3) und dem Außenbehälter (2) zumindest bereichsweise ein Zwischenglied (10) zur spielenden Lagerung eines wärmeleitenden Glieds, insbesondere in Form einer Bodenplatte (20), angeordnet ist, und
das Glied (20) in Wärmeleitkontakt mit dem Heizelement (30) steht sowie zumindest zeitweise an zumindest einen Bereich des Innenbehälters (3) anpressbar ist, **dadurch gekennzeichnet, daß**
das Glied (20) in einem nicht an dem Innenbehälter (3) angepressten Zustand in zumindest einer Richtung, vorzugsweise in allen drei Raumrichtungen, bewegbar ist, und das Glied (20) gezielt von dem Innenbehälter (3) abkoppelbar ist.

2. Garmodul nach Anspruch 1, **dadurch gekennzeichnet, daß**
das Heizelement (30) als Glied (20) fungiert oder in dem Glied (20) integriert, in dem Außenbehälter (2) integriert, außen an dem Außenbehälter (2) angeordnet oder zwischen dem Glied (20) und dem Außenbehälter (2) angeordnet ist.

3. Garmodul nach Anspruch 1 oder 2, **dadurch gekennzeichnet, daß**
zwischen dem Innenbehälter (3) und dem Zwischenglied (10) und/oder zwischen dem Außenbehälter (2) und dem Zwischenglied (10) eine Schmelzverbindung, Schweißverbindung (11) und/oder Lötverbindung angeordnet ist bzw. sind.

4. Garmodul nach einem der vorangehenden Ansprüche, **gekennzeichnet durch**
eine Vorrichtung zur zumindest zeitweisen, insbesondere einstellbaren, Anpressung des Glieds (20) an den Innenbehälter (3), vorzugsweise umfassend eine elektiomagnetische Stelleinrichtung (40, 50, 100).

5. Garmodul nach Anspruch 4, **dadurch gekennzeichnet, daß**
die elektromagnetische Stelleinrichtung zumindest einen Magneten, wie einen Permanentmagneten (40), in fester Verbindung mit dem Glied (30), zumindest einen Magneten, wie einen Elektromagneten (50), in fester Verbindung mit dem Außenbehälter (2) und eine Steuer- und/oder Regeleinheit (100) umfaßt.

6. Garmodul nach einem der vorangehenden Ansprüche, **gekennzeichnet durch**
eine Steuer- und/oder Regeleinheit (100), die, vorzugsweise über Funk, ansteuerbar ist und/oder das Heizelement (30) und/oder zumindest einen Magneten (50) ansteuert.

7. Garmodul nach einem der vorangehenden Ansprüche, **gekennzeichnet durch**
zumindest einen Sensor, insbesondere für die Temperatur, Feuchte und/oder Last in bzw. auf dem Innenbehälter (3), einen EIN/AUS-Schalter (90), einen Netzanschluß (80) und/oder eine Stromquelle, vorzugsweise in Wirkverbindung mit der Steuerund/oder Regeleinheit (100).

8. Garmodul nach einem der vorangehenden Ansprüche, **dadurch gekennzeichnet, daß**
das Heizelement (30) einen Heizleiter, insbesondere in Form einer Heizspule oder einer Heizfolie, und eine Heizplatte umfaßt.

## Claims

1. A self-heatable cooking module (1) with a container (2,3,10,20) to receive food for cooking and at least one heating element (30) in thermally conductive contact with at least one part (20) of the container (2,3,10,20), the container comprising an inner container (3) and an outer container (2) which surrounds the inner container (3) at least in zones, while
an intermediate member (10) for mounting a thermally conductive member with play, particularly in the form of a base plate (20), is disposed at least in zones between the inner container (3) and the outer container (2) and
the member (20) is in thermally conductive contact with the heating element (30) and is adapted to be pressed at least temporarily against at least one zone of the inner container (3), **characterised in that** the member (20) in a state in which it is not pressed against the inner container (3) is movable in at least one direction, preferably in all three directions in space, and the member (20) is adapted to be controllably decoupled from the inner container (3).

2. A cooking module according to claim 1, **characterised in that** the heating element (30) functions as the member (20) or is integrated in the member (20), is integrated in the outer container (2), is disposed externally on the outer container (2) or is disposed between the member (20) and the outer container (2).

3. A cooking module according to claim 1 or 2, **characterised in that** a fused connection, welded connection (11) and/or soldered connection is/are disposed between the inner container (3) and the intermediate member (10) and/or between the outer container (2) and the intermediate member (10).

4. A cooking module according to any one of the preceding claims, **characterised by** a device for at least temporary and particularly adjustable pressing of the member (20) against the inner container (3), preferably comprising an electromagnetic adjusting device (40,50,100).

5. A cooking module according to claim 4, **characterised in that** the electromagnetic adjusting device comprises at least one magnet, such as a permanent magnet (40), rigidly connected to the member (30), at least one magnet, such as an electromagnet (50), rigidly connected to the outer container (2), and an open loop and/or closed loop control unit (100).

6. A cooking module according to any one of the preceding claims, **characterised by** an open loop and/or closed loop control unit (100) which is controllable preferably by radio and/or controls the heating element (30) and/or at least one magnet (50).

7. A cooking module according to any one of the preceding claims, **characterised by** at least one sensor, particularly for temperature, humidity and/or load in and/or on the inner container (3), and on/off switch (90), a mains connection (80) and/or a current source, preferably operatively connected to the open loop and/or closed loop control unit (100).

8. A cooking module according to any one of the preceding claims, **characterised in that** the heating element (30) comprises a heating conductor, particularly in the form of a heating coil or heating foil, and a heating plate.

## Revendications

1. Module de cuisson (1) à élément chauffant en position libre, avec un récipient (2, 3, 10, 20) pour recevoir du produit à cuire et au moins un élément chauffant (30) en contact de conductivité thermique avec au moins une partie (20) du récipient (2, 3, 10, 20), le récipient comprenant un récipient intérieur (3) et un récipient extérieur (2), entourant au moins par zones le récipient intérieur (3), où, entre le récipient intérieur (3) et le récipient extérieur (2), est disposé, au moins par zones, un organe intermédiaire (10) pour le placement avec du jeu d'un organe conducteur de la chaleur, en particulier réalisé sous la forme d'une plaque de fond (20), et
l'organe (20) est situé en contact de conductivité thermique avec l'élément chauffant (30) et est susceptible d'être pressé, au moins par moments, sur au moins une zone du récipient intérieur (3), **caractérisé en ce que**
l'organe (20) est déplaçable en un état pressé sur le récipient intérieur (3), en au moins une direction, de préférence dans la totalité des trois directions de l'espace, et l'organe (20) est susceptible d'être désaccouplé à dessein du récipient intérieur (3).

2. Module de cuisson selon la revendication 1, **caractérisé en ce que** l'élément chauffant (30) sert d'organe (20) ou est intégré dans l'organe (20), est intégré dans le récipient extérieur (2), est disposé extérieurement au récipient extérieur (2) ou disposé entre l'organe (20) et le récipient extérieur (2).

3. Module de cuisson selon la revendication 1 ou 2, **caractérisé en ce que**, entre le récipient intérieur (3) et l'organe intermédiaire (10), et/ou entre le récipient extérieur (2) et l'organe intermédiaire (10), est, respectivement sont disposée(s), une liaison fusible, une liaison soudée (11) et/ou une liaison brasée.

4. Module de cuisson selon l'une des revendications précédentes, **caractérisé par** un dispositif pour presser, au moins par moments, en particulier de façon réglable l'organe (20) sur le récipient intérieur (3), de préférence comprenant un dispositif de réglage (40, 50, 100) électromagnétique.

5. Module de cuisson selon la revendication 4, **caractérisé en ce que** le dispositif de réglage électromagnétique comprend au moins un aimant, tel qu'un aimant permanent (40), en liaison rigide avec l'organe (30), au moins un aimant, tel qu'un électroaimant (50), en liaison rigide avec le récipient intérieur (2), et une unité de commande et/ou de régulation (100).

6. Module de cuisson selon l'une des revendications précédentes, **caractérisé par** une unité de commande et/ou de régulation (100), pouvant être commandée, de préférence, par radio et/ou commandant l'élément chauffant (30) et/ou au moins un aimant (50).

7. Module de cuisson selon l'une des revendications précédentes, **caractérisé par** au moins un capteur, en particulier pour la température, l'humidité et/ou la charge, dans, respectivement sur, le récipient intérieur (3), un interrupteur MARCHE/ARRET (90), un raccordement au réseau ou secteur (80) et/ou une source électrique, de préférence en liaison fonctionnelle avec l'unité de commande et/ou de régulation (100).

8. Module de cuisson selon l'une des revendications précédentes, **caractérisé en ce que** l'élément chauffant (30) comprend un conducteur de chauffage, en particulier est réalisé sous la forme d'une bobine de chauffage et/ou d'une feuille de chauffage, et comprend une plaque chauffante.
